# EUROPEAN PATENT APPLICATION

(11) **EP 4 845 069 A1**
(43) Date of publication of application: **25.11.2026**
(21) Application number: 26177143.0
(22) Date of filing: 07.05.2026
(51) Int. Cl.: H04L 1/1607

(54) **HANDLING PUCCH OVERLAPPING WITH A-CSI REPORTS IN OCC PERIOD**

(30) Priority: 09.05.2025 WO PCT/CN2025/094056
(71) Applicant: Nokia Technologies Oy, 02610 Espoo (FI)
(72) Inventor: WU, Yuan Xing, Hangzhou (CN); FREDERIKSEN, Frank, Klarup (DK); MARCONE, Alessio, Munich (DE); BI, Bo, Ulm (DE)
(74) Representative: Nokia EPO representatives

(57) **Abstract**

Embodiments of the present disclosure relate to handling PUCCH overlapping with OCC based PUSCH repetitions containing A-CSI reports. In an aspect, a terminal device receives, from a network device, first scheduling information for the transmission of physical uplink shared channel (PUSCH) repetitions containing aperiodic channel state information (A-CSI) reports in an orthogonal cover code (OCC) period. The terminal device receives, from the network device, at least a second scheduling information for at least a hybrid automatic repeat request-acknowledgement (HARQ-ACK) on a physical uplink control channel (PUCCH). Alternatively, the terminal device receives, from the network device, at least a configuration for the transmission of at least a channel state information (CSI) on PUCCH. The terminal device determines to multiplex the at least a HARQ-ACK and the A-CSI reports in the PUSCH repetitions. Alternatively, the terminal device determines to drop the at least a CSI in the same OCC period.

## Description

### FIELD

Various example embodiments relate to the field of communication and in particular, to apparatuses, methods, and a computer readable medium for handling PUCCH overlapping with OCC based PUSCH repetitions containing A-CSI reports.

### BACKGROUND

A communication network can be seen as a facility that enables communications between two or more communication devices, or provides communication devices access to a data network. A mobile or wireless communication network is one example of a communication network.

Such communication networks operate in accordance with standards, such as those promulgated by Third Generation Partnership Project (3GPP) or European Telecommunications Standards Institute (ETSI). Examples of such standards include the so-called 5th generation (5G) standard, 6th generation (6G) or other standards promulgated by 3GPP.

### SUMMARY

In general, example embodiments of the present disclosure provide a solution for handling PUCCH overlapping with OCC based PUSCH repetitions containing A-CSI reports.

In a first aspect, there is provided a first apparatus. The first apparatus comprises at least one processor; and at least one memory storing instructions that, when executed by the at least one processor, cause the first apparatus at least to: receive, from a second apparatus, first scheduling information for the transmission of physical uplink shared channel (PUSCH) repetitions containing aperiodic channel state information (A-CSI) reports in an orthogonal cover code (OCC) period; receive, from the second apparatus, at least a second scheduling information for at least a hybrid automatic repeat request-acknowledgement (HARQ-ACK) on a physical uplink control channel (PUCCH), or receive, from the second apparatus, at least a configuration for the transmission of at least a channel state information (CSI) on PUCCH; and determine to multiplex the at least a HARQ-ACK and the A-CSI reports in the PUSCH repetitions, or determine to drop the at least a CSI in the same OCC period.

In a second aspect, there is provided a second apparatus. The second apparatus comprises at least one processor; and at least one memory storing instructions that, when executed by the at least one processor, cause the second apparatus at least to: transmit, to a first apparatus, first scheduling information for the transmission of the physical uplink shared channel (PUSCH) repetitions containing aperiodic channel state information (A-CSI) reports in an orthogonal cover code (OCC) period; transmit, to the first apparatus, at least a second scheduling information for at least a hybrid automatic repeat request-acknowledgement (HARQ-ACK) on a physical uplink control channel (PUCCH), or transmit, to the first apparatus, at least a configuration for the transmission of at least a channel state information (CSI) on PUCCH; and determine the HARQ-ACK and the A-CSI reports to be multiplexed in the PUSCH repetitions, or determine the at least a CSI in the same OCC period to be dropped.

In a third aspect, there is provided a method. The method comprises receiving, from a second apparatus, first scheduling information for the transmission of physical uplink shared channel (PUSCH) repetitions containing aperiodic channel state information (A-CSI) reports in an orthogonal cover code (OCC) period; receiving, from the second apparatus, at least a second scheduling information for at least a hybrid automatic repeat request-acknowledgement (HARQ-ACK) on a physical uplink control channel (PUCCH), or receiving, from the second apparatus, at least a configuration for the transmission of at least a channel state information (CSI) on PUCCH; and determining to multiplex the at least a HARQ-ACK and the A-CSI reports in the PUSCH repetitions, or determining to drop the at least a CSI in the same OCC period.

In a fourth aspect, there is provided a method. The method comprises transmitting, to a first apparatus, first scheduling information for the transmission of the physical uplink shared channel (PUSCH) repetitions containing aperiodic channel state information (A-CSI) reports in an orthogonal cover code (OCC) period; transmitting, to the first apparatus, at least a second scheduling information for at least a hybrid automatic repeat request-acknowledgement (HARQ-ACK) on a physical uplink control channel (PUCCH), or transmitting, to the first apparatus, at least a configuration for the transmission of at least a channel state information (CSI) on PUCCH; and determining the HARQ-ACK and the A-CSI reports to be multiplexed in the PUSCH repetitions, or determining the at least a CSI in the same OCC period to be dropped.

In a fifth aspect, there is provided a first apparatus. The first apparatus comprising means for receiving, from a second apparatus, first scheduling information for the transmission of physical uplink shared channel (PUSCH) repetitions containing aperiodic channel state information (A-CSI) reports in an orthogonal cover code (OCC) period; means for receiving, from the second apparatus, at least a second scheduling information for at least a hybrid automatic repeat request-acknowledgement (HARQ-ACK) on a physical uplink control channel (PUCCH), or receiving, from the second apparatus, at least a configuration for the transmission of at least a channel state information (CSI) on PUCCH; and means for determining to multiplex the at least a HARQ-ACK and the A-CSI reports in the PUSCH repetitions, or determining to drop the at least a CSI in the same OCC period.

In a sixth aspect, there is provided a second apparatus. The second apparatus comprising means for transmitting, to a first apparatus, first scheduling information for the transmission of the physical uplink shared channel (PUSCH) repetitions containing aperiodic channel state information (A-CSI) reports in an orthogonal cover code (OCC) period; means for transmitting, to the first apparatus, at least a second scheduling information for at least a hybrid automatic repeat request-acknowledgement (HARQ-ACK) on a physical uplink control channel (PUCCH), or transmitting, to the first apparatus, at least a configuration for the transmission of at least a channel state information (CSI) on PUCCH; and means for determining the HARQ-ACK and the A-CSI reports to be multiplexed in the PUSCH repetitions, or determining the at least a CSI in the same OCC period to be dropped.

In a seventh aspect, there is provided a first apparatus. The first apparatus comprising first receiving circuitry configured to receive, from a second apparatus, first scheduling information for the transmission of physical uplink shared channel (PUSCH) repetitions containing aperiodic channel state information (A-CSI) reports in an orthogonal cover code (OCC) period; second receiving circuitry configured to receive, from the second apparatus, at least a second scheduling information for at least a hybrid automatic repeat request-acknowledgement (HARQ-ACK) on a physical uplink control channel (PUCCH), or receive, from the second apparatus, at least a configuration for the transmission of at least a channel state information (CSI) on PUCCH; and determining circuitry configured to determine to multiplex the at least a HARQ-ACK and the A-CSI reports in the PUSCH repetitions, or determine to drop the at least a CSI in the same OCC period.

In an eighth aspect, there is provided a second apparatus. The second apparatus comprising first transmitting circuitry configured to transmit, to a first apparatus, first scheduling information for the transmission of the physical uplink shared channel (PUSCH) repetitions containing aperiodic channel state information (A-CSI) reports in an orthogonal cover code (OCC) period; second transmitting circuitry configured to transmit, to the first apparatus, at least a second scheduling information for at least a hybrid automatic repeat request-acknowledgement (HARQ-ACK) on a physical uplink control channel (PUCCH), or transmit, to the first apparatus, at least a configuration for the transmission of at least a channel state information (CSI) on PUCCH; and determining circuitry configured to determine the HARQ-ACK and the A-CSI reports to be multiplexed in the PUSCH repetitions, or determine the at least a CSI in the same OCC period to be dropped.

In a ninth aspect, there is provided a non-transitory computer readable medium comprising program instructions for causing an apparatus to perform at least the method according to the third or the fourth aspects.

In a tenth aspect, there is provided a computer program comprising instructions, which, when executed by an apparatus, cause the apparatus at least to perform at least the method according to the third or the fourth aspects.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIG. 1 illustrates a schematic block diagram of an example network environment in which some embodiments of the present disclosure may be implemented;
FIG. 2 illustrates a schematic signaling diagram of an example process for handling PUCCH overlapping with OCC based PUSCH repetitions containing A-CSI reports in accordance with some embodiments of the present disclosure;
FIG. 3 illustrates a schematic signaling diagram of an example process for handling PUCCH overlapping with OCC based PUSCH repetitions containing A-CSI reports in accordance with some embodiments of the present disclosure;
FIGS. 4A and 4B illustrate schematic block diagrams of example procedure for handling PUCCH overlapping with OCC based PUSCH repetitions containing A-CSI reports in accordance with some embodiments of the present disclosure;
FIG. 5 illustrates a flowchart of a method implemented at a terminal device according to some embodiments of the present disclosure;
FIG. 6 illustrates a flowchart of a method implemented at a network device according to some embodiments of the present disclosure;
FIG. 7 illustrates a simplified block diagram of an apparatus that is suitable for implementing embodiments of the present disclosure; and
FIG. 8 illustrates a block diagram of an example computer readable medium in accordance with some embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. As used herein, the terms "the at least one" and "the one or more" mean "any one of the at least one" and "any one of the one or more", respectively.

As used in this application, the term "circuitry" may refer to one or more or all of the following:
(a) hardware-only circuit implementations (such as implementations in analog, digital and/or quantum circuitry) and
(b) combinations of hardware circuit(s) and software, such as (as applicable):
   (i) a combination of analog, digital and/or quantum hardware circuit(s) with software/firmware and
   (ii) any or all portions of hardware processor(s) (including digital and/or quantum processor(s)) with software, and memory(ies) that work together to cause an apparatus, such as a mobile device, computing device, or server, to perform various functions) and
(c) any or all portions of hardware circuit(s), such as a microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-loT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In current communication networks, physical uplink shared channel (PUSCH) repetitions are introduced to enhance signal reliability and performance. In association with the PUSCH repetitions, orthogonal cover code (OCC) can be utilized. The OCC is a coding technique that can be used to enhance the capacity/throughput of a cellular network. In particular, one could generate a set of orthogonal codes (e.g. Walsh-Hadamard codes) having ideal zero cross-correlation and assign different codes to different UEs to achieve orthogonal (i.e. no interference) UL transmissions on the same time-frequency resources.

Normally, a UE is configured to transmit uplink (UL) control information (UCI) on the physical uplink control channel (PUCCH). The UCI may comprise channel state information (CSI), scheduling requests (SR) and hybrid automatic repeat request-acknowledgement (HARQ-ACK) information. As part of the normal data transmission, the UE's payload would be transmitted on the PUSCH, which would normally be transmitted in either a full slot or during a fraction of a slot. When a UE is having both PUCCH and PUSCH expected to be transmitted in the same slot (or more generically in overlapping time resources), the UE will need to "make room" in the normal PUSCH resources to be able to transmit the UCI carried on PUCCH along with the PUSCH transmission.

In some examples, if a UE transmits a PUSCH over one or more slots or multiple PUSCHs over one or more slots that are scheduled by a downlink control information (DCI) format, and the UE would transmit a PUCCH with HARQ-ACK and/or CSI information over a single slot that overlaps with the PUSCH transmission in the one or more slots, and the PUSCH transmission in the one or more slots fulfills the predefined conditions for multiplexing the HARQ-ACK and/or CSI information, the UE multiplexes the HARQ-ACK and/or CSI information in the PUSCH transmission in the one or more slots. In some alternative examples, the UE does not multiplex HARQ-ACK and/or CSI information in the PUSCH transmission in a slot from the one or more slots if the UE would not transmit a single-slot PUCCH with HARQ-ACK and/or CSI information in the slot in case the PUSCH transmission is absent. It is to be noted that UCI multiplexing in PUSCH occurs at bit level, and the UCI codeword(s) and UL-SCH codeword are concatenated to form a single codeword to transmit on the PUSCH.

In some examples, the PUSCH may contain aperiodic channel state information (A-CSI) reports. In this case, if the PUCCH is overlapping with the PUSCH containing A-CSI reports, and if the UE would multiplex UCI in a PUCCH transmission that overlaps with a PUSCH transmission, and if the PUSCH and PUCCH transmissions fulfil the predefined conditions for UCI multiplexing, then the UE multiplexes only HARQ-ACK information, if any, from the UCI in the PUSCH transmission.

However, in the example scenarios where the PUCCH is overlapped with OCC based PUSCH repetitions containing A-CSI reports, the multiplexing of the A-CSI reports and UCls would be complex and may raise some problems. For example, in one case, a HARQ-ACK or a CSI on PUCCH is scheduled in the same OCC period as the A-CSI reports in the PUSCH repetitions. Specifically, the HARQ-ACK or the CSI is located in a different slot than the A-CSI reports. According to current specification, due to the HARQ-ACK or CSI is in a different slot than the A-CSI reports, the multiplexing of A-CSI into the PUSCH repetitions will not take the HARQ-ACK or CSI into account, similarly, the multiplexing of HARQ-ACK or CSI into the PUSCH repetitions will also not consider the A-CSI. However, in order to guarantee the OCC orthogonality, the payloads of all the PUSCH repetitions within an OCC period must be identical. One possible solution is, the PUSCH repetitions multiplexed with HARQ-ACK or CSI further consider to be multiplexed with the A-CSI reports, and the PUSCH repetitions multiplexed with A-CSI reports also further consider to be multiplexed with the HARQ-ACK or CSI. Then the problems occur. For example, the payload and number of coded modulation symbols (i.e. rate matching) of the A-CSI reports need to be adjusted when the A-CSI reports needs further to be multiplexed with a HARQ-ACK, which will bring big complexity from UE implementation point of view. In addition, in current specifications, it does not support that a PUSCH repetition multiplexed with A-CSI reports is further to be multiplexed with a CSI on PUCCH, and it also does not support that a PUSCH repetition multiplexed with a CSI on PUCCH is further to be multiplexed with A-CSI reports.

Although the above example scenarios are specific, it is likely that there are more problems in UCI handling. Thus, there is requirement for handling mechanism when PUCCH is overlapped with OCC PUSCH repetitions containing A-CSI reports within an OCC period.

In view of the above, embodiments of the present disclosure provide solutions for handling PUCCH overlapping with PUSCH repetitions containing A-CSI reports in an OCC period. In these solutions, the UE determines UCI handling when there are PUCCHs and A-CSI in current OCC period. If the UCI includes a HARQ-ACK, the UE determines to multiplex HARQ-ACK and A-CSI and PUSCH TB in a PUSCH repetition no matter HARQ-ACK is in the same slot as the A-CSI or in a different slot than the A-CSI, and repeat the multiplexed PUSCH repetition in all the slots within the OCC period. If the UCI includes other PUCCHs (including CSI or SR) within the OCC period, the UE determines to drop the UCI other than the HARQ-ACK. In this way, the embodiments of the present disclosure allow the UE to handle the transmission of UCI on PUCCH when overlapped with OCC PUSCH with A-CSI within the same OCC period without affecting orthogonality across OCC transmissions.

It should be appreciated that the term "OCC PUSCH repetitions" means OCC based PUSCH repetitions. The OCC based PUSCH repetitions means PUSCH repetitions applied with an OCC code. The OCC PUSCH repetitions and the OCC based PUSCH repetitions can be used interchangeably. The term "OCC period" is commonly used to describe the time duration where a UE would be transmitting PUSCH repetitions that are subject to the same orthogonal cover code (OCC). Alternative terms for "OCC period" could be "OCC group" or "PUSCH OCC group which can be used interchangeably. In addition, it should be also appreciated that the PUSCH repetitions within an OCC period are OCC based PUSCH repetitions if there is no specific statement.

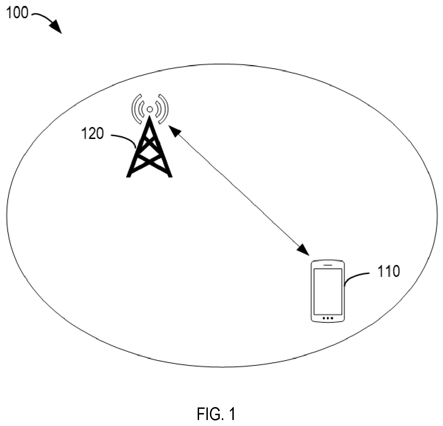

For illustrative purposes, principles and example embodiments of the present disclosure will be described below with reference to FIGS. 1-8. However, it is to be noted that these embodiments are given to enable the skilled in the art to understand concepts of the present disclosure and implement the solution as proposed herein, and not intended to limit scope of the present disclosure in any way.

FIG. 1 illustrates a schematic block diagram of an example network environment 100 in which some embodiments of the present disclosure may be implemented. In the descriptions of the example embodiments of the present disclosure, the network environment 100 may also be referred to as a communication system 100 (for example, a portion of a communication network). For illustrative purposes only, various aspects of example embodiments will be described in the context of one or more terminal devices and network devices that communicate with one another. It should be appreciated, however, that the description herein may be applicable to other types of apparatus or other similar apparatuses that are referenced using other terminology.

The environment 100 includes a terminal device 110 and a network device 120. The network environment 100 may include any suitable number of devices and cells. In the network environment 100, the network device 120 may provide services to the terminal device 110, and the network device 120 and the terminal device 110 may communicate data and control information with each other. In some embodiments, the network device 120 and the terminal device 110 may communicate with direct links/channels. In the embodiment as illustrated in FIG. 1, the terminal device 110 is configured to perform the DSR format selection mechanism in accordance with some example embodiments of the present disclosure.

In the network environment 100, a link from the network device 120 to the terminal device 110 is referred to as a downlink (DL), while a link from the terminal device 110 to the network device 120 is referred to as an uplink (UL). In downlink, the network device 120 is a transmitting (TX) device (or a transmitter) and the terminal device 110 is a receiving (RX) device (or a receiver). In uplink, the terminal device 110 is a transmitting TX device (or a transmitter) and the network device 120 is an RX device (or a receiver). It is to be understood that the network device 120 may provide one or more serving cells. In some embodiments, the network device 120 may provide multiple cells.

It is to be understood that the particular number of various communication devices and the particular number of various communication links as shown in FIG. 1 is for illustration purpose only without suggesting any limitations. The network environment 100 may include any suitable number of communication devices, any suitable number of communication links, and any suitable number of other elements adapted for implementing communications. In addition, it should be appreciated that there may be various wireless as well as wireline communications (if needed) among all of the communication devices.

Communications in the network environment 100 may be implemented according to any proper communication protocol(s), comprising, but not limited to, cellular communication protocols of the fourth generation (4G), the fifth generation (5G) and the sixth generation (6G) and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

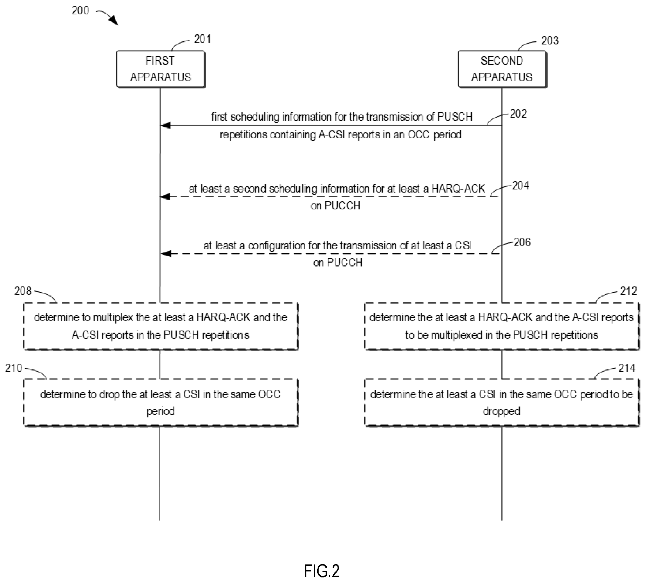

Reference is now made to FIG. 2, which illustrates a schematic signaling diagram of an example process 200 for handling PUCCH overlapping with OCC based PUSCH repetitions containing A-CSI reports in accordance with some embodiments of the present disclosure. For the purpose of discussion, the process 200 will be described with reference to FIG. 1. The process 200 may involve the terminal device 110 and the network device 120 as illustrated in FIG. 1. It would be appreciated that although the process 200 has been described referring to the network environment 100 of FIG. 1, this process 200 may be likewise applied to other similar communication scenarios.

As illustrated in FIG. 2, in the process 200, the network device 120 transmits (202), to the terminal device 110, first scheduling information for the transmission of physical uplink shared channel (PUSCH) repetitions containing aperiodic channel state information (A-CSI) reports in an orthogonal cover code (OCC) period.

In some example embodiments, the A-CSI reports maybe scheduled in at most one slot among the slots of the OCC period. Thus, the terminal device 110 would not expect that there are more than one slots with A-CSI reports within an OCC period. In these embodiments, the network device 120 ensures that that there is at most one slot containing A-CSI reports within an OCC period.

The network device 120 further transmits (204), to the terminal device 110, at least a second scheduling information for at least a hybrid automatic repeat request-acknowledgement (HARQ-ACK) on a physical uplink control channel (PUCCH), or transmits (206), to the terminal device 110, at least a configuration for the transmission of at least a channel state information (CSI) on PUCCH. Alternatively, the network device 120 transmits, to the terminal device 110, both the at least a second scheduling information for at least a HARQ-ACK and the at least a configuration for the transmission of at least a CSI. It should be appreciated that the transmitting actions at 202, 204 and 206 have no sequence order in time.

In some example embodiments, the HARQ-ACK maybe scheduled in a single PUCCH slot among the slots of the OCC period. Thus, the terminal device 110 would not expect that there is more than one slot with HARQ-ACK. In these embodiments, the network device 120 ensures that hat there is only one slot with HARQ-ACK. Relatively, in some example embodiments, multiple CSIs on PUCCH maybe scheduled in multiple PUCCH slots among the slots of the OCC period.

Upon receiving of the first scheduling information and receiving of the at least a second scheduling information for the at least a HARQ-ACK, the terminal device 110 determines (208) to multiplex the at least a HARQ-ACK and the A-CSI reports in the PUSCH repetitions. For example, the terminal device 110 may multiplex the HARQ-ACK, the A-CSI reports and the PUSCH transport block (TB) in a PUSCH repetition no matter HARQ-ACK is in the same slot as A-CSI or in a different slot than the A-CSI, and repeat the multiplexed PUSCH repetition in all the slots within the OCC period to obtain the multiplexed PUSCH repetitions.

In some embodiments, in a case that the HARQ-ACK and A-CSI are within a same OCC period, the terminal device 110 may determine a payload and a number of coded modulation symbols (i.e. rate matching) for the A-CSI reports based on a number of information bits of the HARQ-ACK information even if the HARQ-ACK is in a different slot than the A-CSI reports.

Relatively, upon receiving of the first scheduling information and receiving of the at least a configuration for the at least a CSI on PUCCH, the terminal device 110 determines to drop the at least a CSI in a case that the at least a CSI is in the same OCC period as the A-CSI reports.

On the other hand, since the network device 120 is able to know the resources allocated for the terminal device 110, the network device 120 determines (212) the HARQ-ACK and the A-CSI reports within a same OCC period to be multiplexed in the PUSCH repetitions based on that the at least a second scheduling information for the at least a HARQ-ACK is transmitted. Alternatively, the network device 120 determines (214) the at least a CSI on PUCCH to be dropped based on that the at least a configuration for the transmission of the at least a CSI on PUCCH is transmitted, wherein the at least a CSI is in the same OCC period as the A-CSI reports. It's noted that the at least a CSI could be in the same slot as the A-CSI reports or in a different slot than the A-CSI reports.

According to the embodiment as illustrated in FIG. 2, the terminal device 110 is allowed to handle the transmission of UCI (HARQ ACK or CSI) when overlapped with OCC PUSCH with A-CSI reports within the same OCC period without affecting orthogonality across OCC transmissions.

In some example embodiments, the HARQ-ACK or CSI may be in a different slot than the A-CSI reports within a same OCC period. Alternatively, the HARQ-ACK or CSI may be in the same slot as the A-CSI reports.

In some example embodiments, the terminal device 110 would not expect that the HARQ-ACK occurs in a different slot from the A-CSI reports when they are in a same OCC period. In these embodiments, the network device 120 ensures that that HARQ-ACK and A-CSI occurs in the same slot if the HARQ-ACK and the A-CSI reports occur in a same OCC period. It should be appreciated that there could be one or more A-CSI reports in the A-CSI reports, and all of them are in a same PUSCH slot.

In some example embodiments, in a case that at least a HARQ-ACK or at least a CSI on PUCCH is in a same OCC period as the A-CSI reports, the terminal device 110 may multiplex the HARQ-ACK and the A-CSI reports in the PUSCH repetitions based on the determination of multiplexing the at least a HARQ-ACK and the A-CSI reports in the PUSCH repetitions, the terminal device 110 may drop the at least a CSI based on the determination of dropping the at least a CSI. Further, the terminal device 110 may transmit, to the network device 120, the multiplexed PUSCH repetitions.

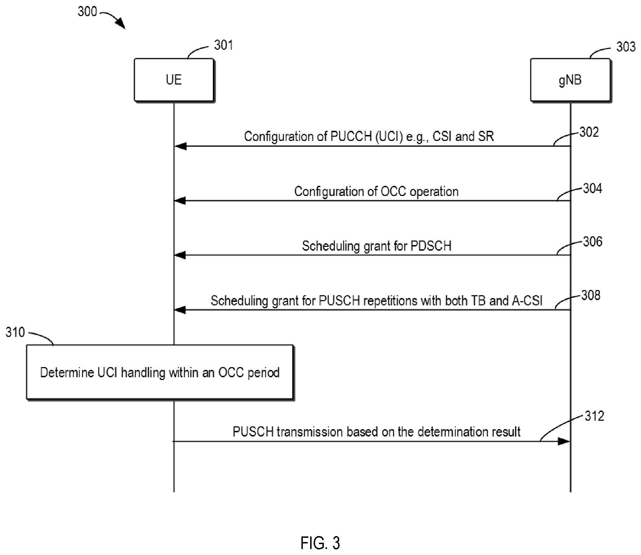

Reference is now made to FIG. 3, which illustrates a schematic signaling diagram of an example process 300 for handling PUCCH overlapping with OCC based PUSCH repetitions containing A-CSI reports in accordance with some embodiments of the present disclosure. For the purpose of discussion, the process 300 will be described with reference to FIG. 1. The process 300 may involve a UE 301 and a gNB 303 which maybe corresponding to the terminal device 110 and the network device 120 as illustrated in FIG. 1. It would be appreciated that although the process 300 has been described referring to the network environment 100 of FIG. 1, this process 300 may be likewise applied to other similar communication scenarios.

As illustrated in FIG. 3, in the process 300, the UE 301 receives (302), from the gNB 303, a configuration of at least a UCI on PUCCH. The UCI may be one or more CSIs or one or more SRs. The configuration of a PUCCH (UCI) may also indicate the slot in which the UCI is scheduled. The UE 301 further receives (304), from the gNB 303, a configuration of OCC operation. The configuration of OCC operation may indicate the length of the OCC. The UE 301 further receives (306), from the gNB 303, a scheduling grant for a physical downlink shared channel (PDSCH). Accordingly, the UE 301 is scheduled to feedback HARQ-ACK at a configured slot.

The UE 301 further receives (308), from the gNB 303, a scheduling grant for PUSCH repetitions with both TBs and an A-CSI report. If the scheduled PUCCHs overlaps with the OCC based PUSCH repetitions containing the TBs and the A-CSI report, the UE 301 determines (310) UCI handling within an OCC period. For example, the UE 301 may determine to multiplex the HARQ-ACK, the A-CSI reports and the PUSCH TB in a PUSCH repetition and repeat the multiplexed PUSCH repetition in all the slots within the OCC period and to drop the CSI. After the handling is determined, the UE 301 performs the multiplexing and dropping to obtain the multiplexed PUSCH repetitions. Then, the UE 301 transmits (312) the PUSCH transmission to the gNB 303.

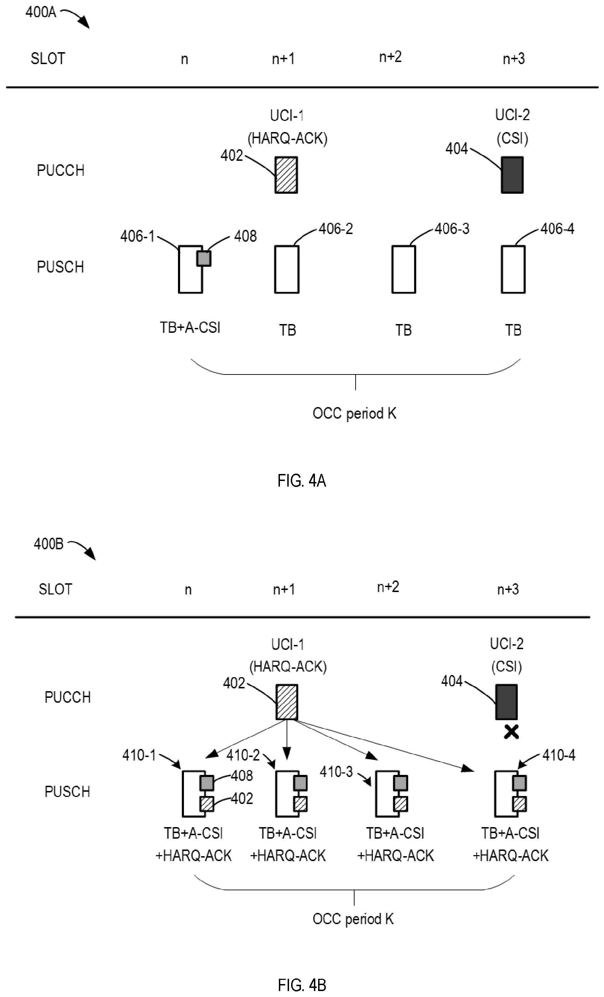

FIG. 4A illustrates a schematic block diagram of an example scheduling procedure 400A in accordance with some embodiments of the present disclosure. As illustrated in FIG. 4A, the UE is configured with OCC operation where the OCC length is 4. Thus, the PUSCH repetitions comprise four repetitions in four slots, including a slot n, a slot n+1, a slot n+2, and a slot n+3 in one OCC period. Further, the UE is scheduled to feedback UCI-1 (HARQ-ACK 402) at the slot n+1. In some alternative embodiments, the HARQ-ACK 402 may be provided in the slot n.

In addition, the UE is configured with a PUCCH transmission (UCI), for example, CSI 404 (UCI-2). According to the configuration, the CSI 404 occurs in the slot n+3 of OCC period k.

The UE is scheduled to transmit OCC based PUSCH repetitions with an OCC length of four. In these PUSCH repetitions, A-CSI reports and TBs are conveyed. Specifically, an A-CSI report 408 occurs in the slot n of OCC period along with the TB 406-1. The TB 406-2 is scheduled to be transmitted in the slot n+1. The TB 406-3 is scheduled to be transmitted in the slot n+2. The TB 406-4 is scheduled to be transmitted in the slot n+3.

FIG. 4B illustrates a schematic block diagram of an example UCI handling procedure 400B in accordance with some embodiments of the present disclosure. The handling procedure 400B corresponds to the scheduling as illustrated in FIG. 4A. The UE determinates the UCI handling in OCC period k. As illustrated in FIG. 4B, the UE determines the UCI handling in accordance with the embodiments of the present disclosure. As a result, the HARQ-ACK 402 is multiplexed with the A-CSI report 408 and the TB 406 in a PUSCH repetition. The multiplexed PUSCH repetition is repeated in all the slots within the OCC period to obtain the multiplexed PUSCH repetitions. In the meantime, the CSI 404 on PUCCH is dropped due to A-CSI will be transmitted in the OCC period.

The multiplexed PUSCH repetitions include a multiplexed PUSCH repetition 410-1, a multiplexed PUSCH repetition 410-2, a multiplexed PUSCH repetition 410-3 and a multiplexed PUSCH repetition 410-4. During the multiplexing, the determination of the payload and number of coded modulation symbols (rate matching) for A-CSI takes UCI-1 (HARQ-ACK) information bits into account. At last, the multiplexed PUSCH repetition is transmitted in all four slots.

Although in the embodiments as illustrated in FIGS. 4A and 4B, the PUSCH repetitions comprise uplink shared channel (ULSCH) data i.e., the TB 406, the PUSCH repetitions may also comprise no ULSCH data in which case the OCC is not applied. In these embodiments, the PUSCH repetitions may comprise a first repetition containing a first A-CSI report associated with a first sounding reference signal (SRS) resource set and a second repetition containing a second A-CSI report associated with a second SRS resource set.

In the embodiments where the PUSCH repetitions comprise no ULSCH data, the terminal device 110 may determine that OCC is not enabled for the PUSCH repetitions regardless of the OCC configuration for the PUSCH repetitions. In some alternative embodiment, the terminal device 110 would not expect that that OCC is enabled for these PUSCH repetitions. The network device ensures that OCC is disabled in case of PUSCH repetitions without ULSCH data.

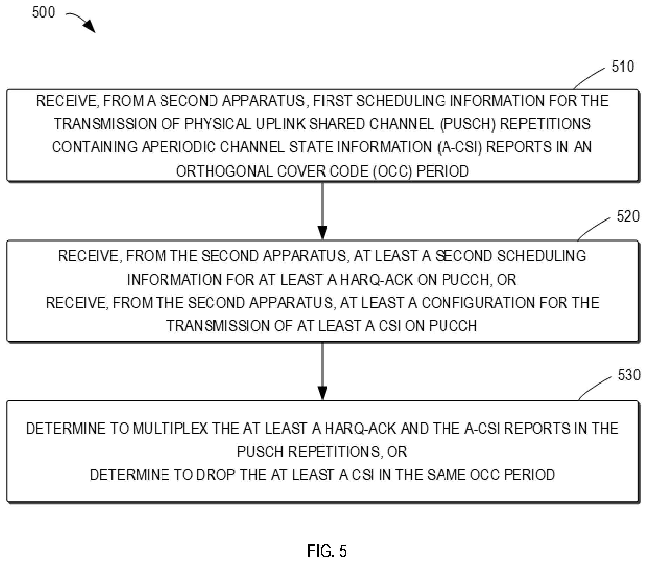

FIG. 5 illustrates a flowchart of an example method 500 implemented at a terminal device according to some embodiments of the present disclosure. For the purpose of discussion, the method 500 will be described from the perspective of the terminal device 110 with reference to FIG 1.

As illustrated in FIG. 5, at block 510, the terminal device 110 receives, from a network device 120, first scheduling information for the transmission of physical uplink shared channel (PUSCH) repetitions containing aperiodic channel state information (A-CSI) reports in an orthogonal cover code (OCC) period. At block 520, the terminal device 110 receives, from the network device 120, at least a second scheduling information for at least a hybrid automatic repeat request-acknowledgement (HARQ-ACK) on a physical uplink control channel (PUCCH), or the terminal device 110 receives, from the network device 120, at least a configuration for the transmission of at least a channel state information (CSI) on PUCCH. At block 530, the terminal device 110 determines to multiplex the at least a HARQ-ACK and the A-CSI reports in the PUSCH repetitions, or the terminal device 110 determines to drop the at least a CSI in the same OCC period.

In some example embodiments, the HARQ-ACK or CSI is transmitted in a same OCC period as the A-CSI reports, and the HARQ-ACK or CSI maybe transmitted in a same slot as the A-CSI reports or in a different slot than the A-CSI reports.

In some example embodiments, the HARQ-ACK maybe scheduled in a single PUCCH slot among the slots of the OCC period.

In some example embodiments, the A-CSI reports maybe scheduled in at most one slot among the slots of the OCC period.

In some example embodiments, the terminal device 110 maybe further caused to: determine a payload and a number of coded modulation symbols for the A-CSI reports based on a number of information bits of the HARQ-ACK information.

In some example embodiments, the terminal device 110 maybe further caused to: based on the determination, multiplex the HARQ-ACK and the A-CSI reports in the PUSCH repetitions, or drop the CSI.

In some example embodiments, the HARQ-ACK maybe in a same slot as the A-CSI reports.

In some example embodiments, the terminal device 110 maybe further caused to: transmit, to the network device 120, the multiplexed PUSCH repetitions.

In some example embodiments, the PUSCH repetitions may comprise uplink shared channel (ULSCH) data.

In some example embodiments, the PUSCH repetitions may comprise no uplink shared channel (ULSCH) data, and the terminal device 110 maybe further caused to: determine that OCC is not enabled for the PUSCH repetitions regardless of the OCC configuration for the PUSCH repetitions.

In some embodiments, a first apparatus (for example, the terminal device 110) capable of performing the method 500 may comprise means for performing the respective steps of the method 500. The means may be implemented in any suitable form. For example, the means may be implemented in a circuitry or software module.

In some embodiments, the first apparatus comprises: means for receiving, from a second apparatus, first scheduling information for the transmission of physical uplink shared channel (PUSCH) repetitions containing aperiodic channel state information (A-CSI) reports in an orthogonal cover code (OCC) period; means for receiving, from the second apparatus, at least a second scheduling information for at least a hybrid automatic repeat request-acknowledgement (HARQ-ACK) on a physical uplink control channel (PUCCH), or means for receiving, from the second apparatus, at least a configuration for the transmission of at least a channel state information (CSI) on PUCCH; and means for determining to multiplex the at least a HARQ-ACK and the A-CSI reports in the PUSCH repetitions, or means for determining to drop the at least a CSI in the same OCC period.

In some example embodiments, the HARQ-ACK or CSI is transmitted in a same OCC period as the A-CSI reports, and the HARQ-ACK or CSI maybe transmitted in a same slot as the A-CSI reports or in a different slot than the A-CSI reports.

In some example embodiments, the HARQ-ACK maybe scheduled in a single PUCCH slot among the slots of the OCC period.

In some example embodiments, the A-CSI reports maybe scheduled in at most one slot among the slots of the OCC period.

In some example embodiments, the apparatus may further comprise: means for determining a payload and a number of coded modulation symbols for the A-CSI reports based on a number of information bits of the HARQ-ACK information.

In some example embodiments, the apparatus may further comprise: means for multiplexing the HARQ-ACK and the A-CSI reports in the PUSCH repetitions, or dropping the CSI based on the determination.

In some example embodiments, the HARQ-ACK maybe in a same slot as the A-CSI reports.

In some example embodiments, the apparatus may further comprise: means for transmitting, to the second apparatus, the multiplexed PUSCH repetitions.

In some example embodiments, the PUSCH repetitions may comprise uplink shared channel (ULSCH) data.

In some example embodiments, the PUSCH repetitions may comprise no uplink shared channel (ULSCH) data, and the apparatus may further comprise: means for determining that OCC is not enabled for the PUSCH repetitions regardless of the OCC configuration for the PUSCH repetitions.

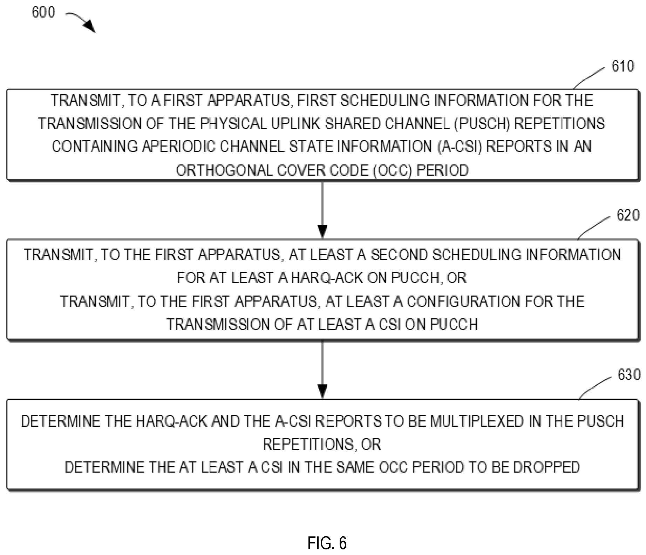

FIG. 6 illustrates a flowchart of an example method 600 implemented at a network device according to some embodiments of the present disclosure. For the purpose of discussion, the method 600 will be described from the perspective of the network device 120 with reference to FIG 1.

As illustrated in FIG. 6, at block 610, the network device 120 transmits, to a terminal device 110, first scheduling information for the transmission of the physical uplink shared channel (PUSCH) repetitions containing aperiodic channel state information (A-CSI) reports in an orthogonal cover code (OCC) period. At block 620, the network device 120 transmits, to the terminal device 110, at least a second scheduling information for at least a hybrid automatic repeat request-acknowledgement (HARQ-ACK) on a physical uplink control channel (PUCCH), or the network device 120 transmit, to the terminal device 110, at least a configuration for the transmission of at least a channel state information (CSI) on PUCCH. At block 630, the network device 120 determines the HARQ-ACK and the A-CSI reports to be multiplexed in the PUSCH repetitions, or the network device 120 determines the at least a CSI in the same OCC period to be dropped.

In some example embodiments, the HARQ-ACK or CSI is in a same OCC period as the A-CSI reports, and the HARQ-ACK or CSI maybe received in a same slot as the A-CSI reports or in a different slot than the A-CSI reports.

In some example embodiments, the HARQ-ACK maybe scheduled in a single slot among the slots of the OCC period.

In some example embodiments, the A-CSI reports maybe scheduled in at most one slot among the slots of the OCC period.

In some example embodiments, a payload and a number of coded modulation symbols for the A-CSI reports maybe determined based on a number of information bits of the HARQ-ACK information.

In some example embodiments, the PUSCH repetitions may comprise uplink shared channel (ULSCH) data.

In some example embodiments, the network device 120 maybe further caused to: determine that OCC is disabled in a case that the PUSCH repetitions comprise no uplink shared channel (ULSCH) data.

In some example embodiments, the network device 120 maybe further caused to: receive, based on the determination and from the terminal device 110, the multiplexed PUSCH repetitions within the OCC period.

In some embodiments, a second apparatus (for example, the network device 120) capable of performing the method 600 may comprise means for performing the respective steps of the method 600. The means may be implemented in any suitable form. For example, the means may be implemented in a circuitry or software module.

In some example embodiments, the second apparatus comprises: means for transmitting, to a first apparatus, first scheduling information for the transmission of the physical uplink shared channel (PUSCH) repetitions containing aperiodic channel state information (A-CSI) reports in an orthogonal cover code (OCC) period; means for transmitting, to the first apparatus, at least a second scheduling information for at least a hybrid automatic repeat request-acknowledgement (HARQ-ACK) on a physical uplink control channel (PUCCH), or means for transmitting, to the first apparatus, at least a configuration for the transmission of at least a channel state information (CSI) on PUCCH; and means for determining the HARQ-ACK and the A-CSI reports to be multiplexed in the PUSCH repetitions, or means for determining the at least a CSI in the same OCC period to be dropped.

In some example embodiments, the HARQ-ACK or CSI is in a same OCC period as the A-CSI reports, and the HARQ-ACK or CSI maybe received in a same slot as the A-CSI reports or in a different slot than the A-CSI reports.

In some example embodiments, the HARQ-ACK maybe scheduled in a single slot among the slots of the OCC period.

In some example embodiments, the A-CSI reports maybe scheduled in at most one slot among the slots of the OCC period.

In some example embodiments, a payload and a number of coded modulation symbols for the A-CSI reports maybe determined based on a number of information bits of the HARQ-ACK information.

In some example embodiments, the PUSCH repetitions may comprise uplink shared channel (ULSCH) data.

In some example embodiments, the second apparatus may further comprise means for determining that OCC is disabled in a case that the PUSCH repetitions comprise no uplink shared channel (ULSCH) data.

In some example embodiments, the second apparatus may further comprise means for receiving, based on the determination and from the first apparatus, the multiplexed PUSCH repetitions within the OCC period.

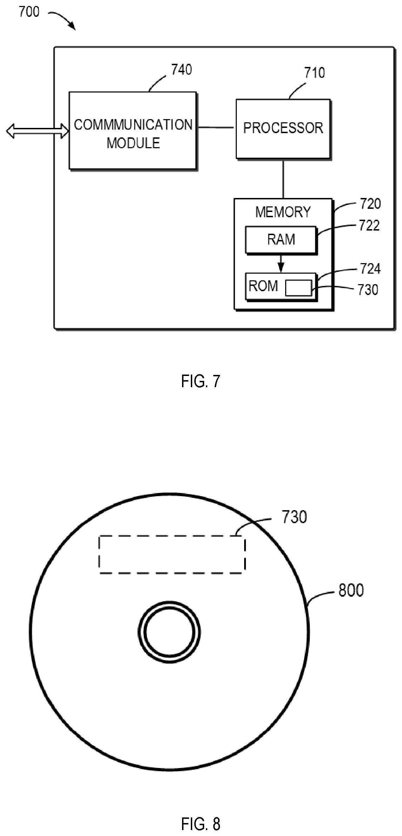

FIG. 7 is a simplified block diagram of a device 700 that is suitable for implementing embodiments of the present disclosure. The device 700 may be provided to implement the communication device, for example the terminal device 110, the network device 120 as shown in FIG. 1. As shown, the device 700 includes a processor 710 (or a plurality of processors), a memory 720 (or a plurality of memories) coupled to the processor 710, and a communication module 740 (or a plurality of communication modules) coupled to the processor 710.

The communication module 740 is for bidirectional communications. The commutation module 740 has at least one antenna to facilitate communication. The communication interface may represent any interface that is necessary for communication with other network elements.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The program 730 may be stored in the ROM 724. The processor 710 may perform any suitable actions and processing by loading the program 730 into the RAM 722.

The embodiments of the present disclosure may be implemented by means of the program 730 so that the device 700 may perform any process of the disclosure as discussed with reference to FIGS. 3 to 4B. The embodiments of the present disclosure may also be implemented by hardware or by a combination of software and hardware.

In some embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. The computer readable medium may include any types of tangible non-volatile storage, such as ROM, EPROM, a flash memory, a hard disk, CD, DVD, and the like. FIG. 7 shows an example of the computer readable medium 700 in form of CD or DVD. The computer readable medium has the program 730 stored thereon.

FIG. 8 illustrates a block diagram of an example of a computer-readable medium 800 in accordance with some example embodiments of the present disclosure. The computer-readable medium 800 has the program 730 stored thereon. It is noted that although the computer-readable medium 800 is depicted in form of CD or DVD, the computer-readable medium 800 may be in any other form suitable for carry or hold the program 730.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 600 as described above with reference to FIGS. 2-5. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable subcombination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus comprising:
at least one processor; and
at least one memory storing instructions that, when executed by the at least one processor, cause the first apparatus at least to:
receive, from a second apparatus, first scheduling information for the transmission of physical uplink shared channel (PUSCH) repetitions containing aperiodic channel state information (A-CSI) reports in an orthogonal cover code (OCC) period;
receive, from the second apparatus, at least a second scheduling information for at least a hybrid automatic repeat request-acknowledgement (HARQ-ACK) on a physical uplink control channel (PUCCH), or receive, from the second apparatus, at least a configuration for the transmission of at least a channel state information (CSI) on PUCCH; and
determine to multiplex the at least a HARQ-ACK and the A-CSI reports in the PUSCH repetitions, or determine to drop the at least a CSI in the same OCC period.

2. The first apparatus of claim 1, wherein the HARQ-ACK or CSI on PUCCH is transmitted in a same OCC period as the A-CSI reports, and the HARQ-ACK or CSI is transmitted in a same slot as the A-CSI reports or in a different slot than the A-CSI reports.

3. The first apparatus of any claims 1 or 2, wherein the first apparatus is further caused to:
based on the determination, multiplex the HARQ-ACK and the A-CSI reports in the PUSCH repetitions, or drop the CSI.

4. The first apparatus of any of claims 1-3, wherein the first apparatus is further caused to: transmit, to the second apparatus, the multiplexed PUSCH repetitions.

5. The first apparatus of any of claims 1-4, wherein the first apparatus comprises a terminal device, and the second apparatus comprises a network device.

6. A second apparatus comprising:
at least one processor; and
at least one memory storing instructions that, when executed by the at least one processor, cause the second apparatus at least to:
transmit, to a first apparatus, first scheduling information for the transmission of the physical uplink shared channel (PUSCH) repetitions containing aperiodic channel state information (A-CSI) reports in an orthogonal cover code (OCC) period;
transmit, to the first apparatus, at least a second scheduling information for at least a hybrid automatic repeat request-acknowledgement (HARQ-ACK) on a physical uplink control channel (PUCCH), or transmit, to the first apparatus, at least a configuration for the transmission of at least a channel state information (CSI) on PUCCH; and
determine the HARQ-ACK and the A-CSI reports to be multiplexed in the PUSCH repetitions, or determine the at least a CSI in the same OCC period to be dropped.

7. The second apparatus of claim 6, wherein the HARQ-ACK or CSI on PUCCH is in a same OCC period as the A-CSI reports, and the HARQ-ACK or CSI is in a same slot as the A-CSI reports or in a different slot than the A-CSI reports.

8. The second apparatus of claim 6 or 7, wherein the second apparatus is further caused to receive, based on the determination and from the first apparatus, the multiplexed PUSCH repetitions within the OCC period.

9. A method comprising:
receiving, from a second apparatus, first scheduling information for the transmission of physical uplink shared channel (PUSCH) repetitions containing aperiodic channel state information (A-CSI) reports in an orthogonal cover code (OCC) period;
receiving, from the second apparatus, at least a second scheduling information for at least a hybrid automatic repeat request-acknowledgement (HARQ-ACK) on a physical uplink control channel (PUCCH), or receiving, from the second apparatus, at least a configuration for the transmission of at least a channel state information (CSI) on PUCCH; and
determining to multiplex the at least a HARQ-ACK and the A-CSI reports in the PUSCH repetitions, or determining to drop the at least a CSI in the same OCC period.

10. A method comprising:
transmitting, to a first apparatus, first scheduling information for the transmission of the physical uplink shared channel (PUSCH) repetitions containing aperiodic channel state information (A-CSI) reports in an orthogonal cover code (OCC) period;
transmitting, to the first apparatus, at least a second scheduling information for at least a hybrid automatic repeat request-acknowledgement (HARQ-ACK) on a physical uplink control channel (PUCCH), or transmitting, to the first apparatus, at least a configuration for the transmission of at least a channel state information (CSI) on PUCCH; and
determining the HARQ-ACK and the A-CSI reports to be multiplexed in the PUSCH repetitions, or determining the at least a CSI in the same OCC period to be dropped.

11. A first apparatus comprising:
means for receiving, from a second apparatus, first scheduling information for the transmission of physical uplink shared channel (PUSCH) repetitions containing aperiodic channel state information (A-CSI) reports in an orthogonal cover code (OCC) period;
means for receiving, from the second apparatus, at least a second scheduling information for at least a hybrid automatic repeat request-acknowledgement (HARQ-ACK) on a physical uplink control channel (PUCCH), or receiving, from the second apparatus, at least a configuration for the transmission of at least a channel state information (CSI) on PUCCH; and
means for determining to multiplex the at least a HARQ-ACK and the A-CSI reports in the PUSCH repetitions, or determining to drop the at least a CSI in the same OCC period.

12. A second apparatus comprising:
means for transmitting, to a first apparatus, first scheduling information for the transmission of the physical uplink shared channel (PUSCH) repetitions containing aperiodic channel state information (A-CSI) reports in an orthogonal cover code (OCC) period;
means for transmitting, to the first apparatus, at least a second scheduling information for at least a hybrid automatic repeat request-acknowledgement (HARQ-ACK) on a physical uplink control channel (PUCCH), or transmitting, to the first apparatus, at least a configuration for the transmission of at least a channel state information (CSI) on PUCCH; and
means for determining the HARQ-ACK and the A-CSI reports to be multiplexed in the PUSCH repetitions, or determining the at least a CSI in the same OCC period to be dropped.

13. A computer readable medium comprising instructions which, when executed by a first apparatus, cause the first apparatus to perform at least the following:
receiving, from a second apparatus, first scheduling information for the transmission of physical uplink shared channel (PUSCH) repetitions containing aperiodic channel state information (A-CSI) reports in an orthogonal cover code (OCC) period;
receiving, from the second apparatus, at least a second scheduling information for at least a hybrid automatic repeat request-acknowledgement (HARQ-ACK) on a physical uplink control channel (PUCCH), or receiving, from the second apparatus, at least a configuration for the transmission of at least a channel state information (CSI) on PUCCH; and
determining to multiplex the at least a HARQ-ACK and the A-CSI reports in the PUSCH repetitions, or determining to drop the at least a CSI in the same OCC period.

14. A computer readable medium comprising instructions which, when executed by a second apparatus, cause the second apparatus to perform at least the following:
transmitting, to a first apparatus, first scheduling information for the transmission of the physical uplink shared channel (PUSCH) repetitions containing aperiodic channel state information (A-CSI) reports in an orthogonal cover code (OCC) period;
transmitting, to the first apparatus, at least a second scheduling information for at least a hybrid automatic repeat request-acknowledgement (HARQ-ACK) on a physical uplink control channel (PUCCH), or transmitting, to the first apparatus, at least a configuration for the transmission of at least a channel state information (CSI) on PUCCH; and
determining the HARQ-ACK and the A-CSI reports to be multiplexed in the PUSCH repetitions, or determining the at least a CSI in the same OCC period to be dropped.
